# DEMANDE DE BREVET EUROPEEN

(11) **EP 1 645 645 A1**
(43) Date de publication de la demande: **12.04.2006**
(21) Numéro de dépôt: 04104968.5
(22) Date de dépôt: 11.10.2004
(51) Int. Cl.: C22B 7/02, C22B 19/30, F27B 9/18

(54) **Traitement de boues d'usines sidérurgiques dans un four à étages**

(71) Demandeur: PAUL WURTH S.A., 1122 Luxembourg (LU)
(72) Inventeur: La désignation de l'inventeur n'a pas encore été déposée
(74) Mandataire: Kihn, Pierre Emile Joseph

(57) **Abrégé**

L'invention propose un procédé de traitement de boues sidérurgiques comprenant l'ajustement de la teneur en CaO disponible des boues afin d'obtenir une teneur en CaO disponible de 3% à 8% rapporté au poids des boues, l'ajout d'un combustible carboné, l'introduction des boues sur un des étages supérieurs d'un four à étages, le chauffage du four à étages, le transfert graduel des boues sur les étages inférieurs, et le réglage de la température des gaz d'échappement du four à étages à au moins 500°C et de celle des boues traitées à la sortie du four à étages à une température comprise entre 700°C et 800°C.

## Description

### Introduction

La présente invention concerne un procédé de traitement de boues d'usines sidérurgiques provenant des poussières de hauts-fourneaux, d'aciéries ou de laminoirs.

Dans les usines sidérurgiques intégrées, la plupart des poussières des traitements de gaz en provenance des haut-fourneaux ou des aciéries, ou des oxydes collectés au laminage se présentent sous forme de boues contenant entre 30 et 70% d'eau. Même après passage dans un filtre-presse, les boues résultantes comportent encore 20 à 40% d'eau, et leur traitement par un procédé pyrométallurgique pour en extraire le zinc et recycler le fer contenu, exige par conséquent un séchage préalable.

En effet, ces boues étant le coproduit majoritaire, il n'est pas possible de les agglomérer en boulettes ou en briquettes en ajoutant des coproduits « secs », car cette agglomération exige une teneur minimale en eau (moins de 10%).

Il en résulte que les rares unités de traitement pyrométallurgique de boues sidérurgiques mises en service récemment (principalement au Japon) comportent une longue série d'opérations, à savoir :
- pré-séchage des boues,
- broyage des boues pré-séchées,
- préparation d'un mélange pouvant être aggloméré, avec ajout d'un liant et d'eau aux boues pré-séchées,
- agglomération du mélange (bouletage ou briquetage),
- post-séchage et/ou maturation des boulettes ou briquettes,
- procédé pyrométallurgique proprement dit, qui dans le cas des installations japonaises citées comporte une étape de calcination et de réduction, avec extraction d'une grande partie du zinc, et
- refroidissement du produit dézingué et pré-réduit, et
- fusion des briquettes calcinées-réduites au haut fourneau.

D'autre part, il est connu de réaliser la calcination de boues brutes dans des fours à étages, mais
- d'une part, ces boues ont une granulométrie et une consistance qui permet un transport régulier de la matière au moyen du dispositif de « rabblage » du four,
- d'autre part l'apport énergétique est réalisé par des combustibles (gaz ou fioul) dont la disponibilité et le prix posent problème ; le coût de cette calcination est alors très élevé, surtout lorsque la boue traitée comporte - comme dans le cas des boues sidérurgiques - une teneur importante en eau et en oxydes de fer, mais aussi en carbonates et en hydrates dont l'évaporation, respectivement la réduction consomment beaucoup d'énergie.

Or, comme les boues sidérurgiques sont issues soit des installations de dépoussiérage (le plus souvent humide), soit de la collecte des oxydes de fer formés à la coulée et au laminage de l'acier, elles ont des granulométries initiales très fines, et des essais préliminaires montrent que ces boues ne sont pas aptes à un tel traitement de calcination au four à étages. En effet, après la phase de séchage, ces boues se délitent en poussière fine, qui ne peut être déplacée par des pelles, car elle se comporte comme de l'eau (en particulier, l'angle de talus est quasi nul).

### Objet de l'invention

L'objet de la présente invention est par conséquent de proposer un procédé de traitement des boues d'usines sidérurgiques simplifié, évitant ainsi la lourde série d'opérations de conditionnement des boues.

Conformément à l'invention, cet objectif est atteint par un procédé selon la revendication 1.

### Description générale de l'invention

Afin de résoudre le problème mentionné ci-dessus, la présente invention propose un procédé de traitement de boues sidérurgiques comprenant les étapes suivantes :
- ajustement de la teneur en CaO disponible des boues afin d'obtenir une teneur en CaO disponible de 3% à 8% rapporté au poids des boues,
- ajout d'un combustible carboné,
- introduction des boues sur un des étages supérieurs d'un four à étages,
- chauffage du four à étages,
- transfert graduel des boues sur les étages inférieurs,
- réglage de la température des gaz d'échappement du four à étages à au moins 500°C et de celle des boues traitées à la sortie du four à étages à une température comprise entre 700°C et 800°C.

Le procédé selon l'invention permet non seulement d'éviter les opérations lourdes de préparation mentionnées ci-dessus, mais permet également d'utiliser un four à étages dans lequel on charge directement les boues. En fait, la solution proposée s'appuie sur une utilisation particulière du four à étages et consiste à réaliser un traitement de calcination de la boue en ajustant la composition de la boue et le chemin de température de sorte à provoquer une sorte de « granulation » de la boue après son séchage, et ce afin de la rendre transportable.

En effet, cette pseudo-granulation a lieu spontanément avec la montée en température et en présence d'une certaine proportion de chaux CaO disponible, qui forme avec les oxydes de fer (FeO, Fe₂O₃) des ferrites de chaux 2CaO.Fe₂O₃ ou CaO.FeO.Fe₂O₃, composés qui peuvent commencer à « fritter », c'est-à-dire à former des phases pâteuses, collantes, à partir de ~ 700°C.

Or, malgré des teneurs apparemment suffisantes en chaux dans la plupart des boues (voir le tableau ci-dessous), cette pseudo-granulation ne se produit pas toujours. Il a été trouvé que toute la chaux, dont la teneur a été déterminé par les méthodes de dosage classiques, n'est pas disponible pour la réaction de formation de ferrites de chaux.

En effet, des analyses fines montrent que la chaux, telle qu'elle est dosée par les méthodes classiques dans les boues (chaux apparente), y est présente, du moins en partie, sous forme de différents sels de calcium, comme par exemple le carbonate CaCO₃, le sulfate CaSO₄, etc. Cette partie de la « chaux » ne sera donc disponible pour former des ferrites de calcium qu'après décomposition (par exemple du carbonate en chaux et en dioxyde de carbone : CaCO₃ → CaO + CO₂). Or cette réaction est réalisée industriellement à plus de 900°C, et en principe elle est très lente à 700 °C.

On constate qu'on aurait intérêt à augmenter la température à 800 °C ou même au-delà, mais l'expérience montre que le carbone présent commence alors à réduire le fer de manière notable (FeO + C → Fe + CO), et que le gaz CO dégagé empêche la formation des ferrites de calcium, responsables de la granulation spontanée de la boue qui, justement, assure son aptitude à être traitée au four à étages.

La chaux ou CaO disponible est par conséquent la fraction de la chaux apparente qui peut, dans les conditions retenues, réagir avec les oxydes de fer présents dans les boues pour former les ferrites de chaux responsables de l'agglomération. Les études qui ont mené à la présente invention ont montré qu'en pratique la fraction de CaO disponible ne représente en général que 10 à 50% de la chaux apparente.

La teneur en CaO - il s'agit principalement de chaux hydratée Ca(OH)₂, car dans une boue à 20~40% H₂O on ne peut pas avoir de chaux vive - est évidemment exprimée en pourcentage en poids de CaO par rapport à la boue sèche.

Ce procédé avantageux de séchage-calcination avec granulation, permettant de traiter des boues très fines au four à étages, ne fonctionne donc qu'avec un réglage « pointu » de la composition, en l'occurrence de la chaux disponible, et d'autres paramètres, tels que la température, etc.

Pour le traitement des boues selon l'invention, il importe par conséquent d'assurer dans la boue à traiter une proportion minimale de chaux disponible, soit en jouant sur le mélange de différentes boues (ce qui n'est généralement pas possible ou économiquement faisable à échelle industrielle), soit de préférence en ajoutant de la chaux. En pratique, l'ajustement de la teneur en CaO disponible est réalisé par ajout de chaux vive et/ou de chaux hydratée. Comme mentionné plus haut, pour un fonctionnement optimal du procédé, la teneur en CaO disponible devra généralement être comprise entre 6% et 15%, de préférence entre 8% et 12%.

Un avantage du présent procédé est que le combustible carboné servant à l'apport d'énergie nécessaire pour le chauffage des boues peut en principe être choisi parmi les combustibles fossiles courants comme le fioul, le gaz et, surtout le charbon ou même d'une combinaison de ceux-ci. Outre l'avantage économique de pouvoir utiliser du charbon au lieu du fioul ou du gaz, le procédé permet en outre que l'ajout de combustible carboné soit réalisé en ajoutant ou en mélangeant simplement le charbon aux boues. L'ajout de charbon aux boues peut être - du moins en partie - réalisé sur l'étage supérieur du four à étages. Il est également prévu que le charbon pourra être - du moins en partie - mélangé aux boues avant leur introduction dans le four à étages. Pour des raisons pratiques, le charbon y est mélangé de préférence avant l'introduction dans le four à étages.

Il est également envisagé que l'ajout de combustible carboné est réalisé - du moins en partie - à l'aide de brûleurs installés dans le four à étages et alimentés en gaz ou en fioul.

Le charbon est à doser principalement en fonction de l'humidité de la boue. En règle générale (20~40% d'humidité), l'ordre de grandeur de la quantité de charbon à utiliser est d'au moins 100 kg de combustible carboné (charbon et/ou équivalent de gaz et/ou de fioul) par tonne de boue, de préférence entre 100 et 200 kg par tonne de boue.

Un facteur important du procédé de traitement selon l'invention est le réglage approprié de la température des différents étages du four. En l'occurrence, la boue est introduite dans le four à étages en assurant dans l'étage supérieur un apport thermique tel que les gaz en sortent à une température supérieure à 500°C, de préférence supérieure à 600°C, de sorte à assurer un séchage rapide de la boue. D'autre part, il est important de régler les étages inférieurs du four à des températures comprises entre 700 et 800°C (températures des réfractaires), de préférence entre 700 et 750°C, et le temps de séjour de la boue à une durée permettant d'assurer une température de la matière défournée d'au moins 700°C.

Dans une forme de réalisation, le réglage de la température des gaz d'échappement du four à étages à au moins 500°C et/ou de celle des boues traitées à la sortie du four à étages à une température comprise entre 700°C et 800°C est réalisé par injection d'un gaz contenant de l'oxygène, de préférence de l'air. En variante ou en complément, le réglage de la température des gaz d'échappement du four à étage à au moins 500°C et/ou de celle des boues traitées à la sortie du four à étages à une température comprise entre 700°C et 800°C est réalisé par des brûleurs alimentés en gaz ou en fioul. En pratique, la combustion étagée du combustible carboné, de préférence le charbon, sera généralement assurée par une injection d'air réglée pour atteindre et maintenir les températures de consigne des étages. Un complément d'énergie éventuellement nécessaire à l'un ou l'autre étage peut être fourni par des brûleurs alimentés en gaz ou en fioul.

Dans la pratique, on ne règle donc pas directement la température des gaz d'échappement, mais indirectement, par les apports de charbon apporté avec la boue, et d'air et, le cas échéant, de complément gaz ou fioul dans les premiers étages (étages supérieurs) ; donc on règle les apports charbon, gaz et air de sorte à obtenir une température de fumée, c'est-à-dire des gaz d'échappement >500°C.

De même, on ne règle pas directement la température de la matière défournée, mais indirectement, par les températures des derniers étages (la régulation de température de ces derniers se faisant par apport d'air brûlant du charbon), et le temps de séjour. Par conséquent, si le temps de séjour est long (p.ex. 2h) la température de la matière défournée sera très proche de celle du dernier étage (température de réfractaire), p.ex. 725°C pour une température d'étage de 750°C, mais pour un temps de séjour plus court (1 h), on défournera à ~700°C pour la même température du dernier étage (750°C). Si on souhaite travailler avec des temps de séjour faibles, il faut donc disposer de températures plus élevées aux derniers étages pour obtenir une température donnée de la matière défournée.

En résumé, les avantages d'un procédé de traitement de séchage-calcination de boues sidérurgiques selon l'invention au four à étages sont les suivants :
- assurer la faisabilité du transport de matière, et ainsi éviter une préparation multi-étapes très lourde,
- minimiser le besoin énergétique de l'étape de réduction-fusion ultérieure éventuelle, en décomposant les carbonates et hydrates, qui sont des réactions très endothermiques, et
- minimiser davantage le coût énergétique de l'opération de séchage-calcination, en utilisant le charbon comme combustible principal.

Dans un mode réalisation avantageux du procédé de traitement de boues sidérurgiques décrit ci-dessus, celui-ci comprend en outre les étapes suivantes :
- traitement pyrométallurgique comprenant la réduction et la fusion des boues traitées sortant du four à étages dans un four électrique,
- extraction de zinc éventuellement contenu dans les boues traitées, des gaz d'échappement et
- coulée de fonte et de laitier à la sortie du four électrique.

Ces étapes, qui constituent une opération de réduction-fusion finale avec dézingage des boues traitées ou calcinées, sont avantageusement réalisées dans un four électrique à arc, par exemple suivant un procédé comme celui décrit dans la demande de brevet international WO2002068700.

Ce dernier procédé met en oeuvre un four électrique à arc libre dans un procédé très particulier, consistant à charger les boues traitées chaudes (de préférence directement à la sortie du four à étages, c'est-à-dire à une température supérieure à 500°C et à travailler sur un pied de bain de fonte surmonté d'une couche de laitier liquide non moussant. Le brassage de pied de bain peut s'effectuer par injection d'un gaz neutre (azote, argon) à travers la sole du four et/ou par injection de gaz contenant de l'oxygène au moyen d'une ou plusieurs lances. Le pied de bain est très fortement brassé par injection de gaz. Ce brassage très énergique permet d'homogénéiser en température le bain métal + laitier et de renouveler la surface de la couche de laitier afin qu'elle reste surchauffée et bien liquide, et capable d'absorber les boues traitées sans que celles-ci ne se solidifient et forment une croûte infranchissable.

Dans le cas où le brassage du pied de bain est réalisé par injection de gaz neutre ou inerte à travers la sole du four électrique à arc, le débit du gaz inerte dans le procédé proposé est de préférence compris entre 50 l/min.t (litres par minute et par tonne de métal liquide du bain) et 150 l/min.t. De manière particulièrement préférée, le débit de brassage se situe entre 80 et 120 I/min.t. Ces débits sont à ajuster en fonction de la hauteur du pied de bain et du nombre et de la position des points d'injection. Ce débit élevé de brassage est sans rapport avec la pratique courante au four électrique à arc. En effet, le débit de brassage dans les procédés classiques de production d'acier dans un four électrique à arc se situe dans la gamme de 1 à 10 l/min.t et est destiné seulement à homogénéiser le bain et à régulariser les résultats métallurgiques et la température.

Pour garantir l'efficacité optimale du brassage, le pied de bain métallique doit avoir une certaine hauteur minimale, de préférence une hauteur d'au moins 0,3 m, afin de garantir un brassage énergique du bain de métal en fusion. Il faut veiller à éviter que l'injection du gaz de brassage par la sole du four ne fasse simplement un "trou" au travers du bain de métal, sans le mettre énergiquement en mouvement. Bien entendu, cette hauteur minimale peut varier en fonction de la configuration du four à arc électrique et de l'emplacement des moyens d'injection de gaz qui sont de préférence des briques poreuses ou bien des tuyères.

Des moyens d'injection de gaz de brassage sont positionnés le cas échéant près du bord extérieur de la sole du four à arc électrique, c'est à dire latéralement au fond du bain, de manière à ramener vers la zone centrale plus chaude, située entre les électrodes, les particules de boues traitées restant ou tendant à s'agglomérer au bord du four.

Alternativement ou complémentairement au brassage du pied de bain par injection de gaz inerte à travers la sole du four électrique à arc, le brassage du pied de bain est réalisé par injection de gaz contenant de l'oxygène au moyen d'un ou plusieurs injecteurs. En injectant ce gaz contenant de l'oxygène dans le pied de bain au moyen d'un jet pénétrant, il se forme des bulles de CO gazeux par réaction avec le C de la fonte. Ce dégagement de CO dans le métal liquide crée des turbulences qui assurent un brassage vigoureux du pied de bain et du laitier.

Afin de protéger les boues traitées pendant leur chute dans le four, celles-ci peuvent être entourées par un rideau de gaz inerte, de préférence de l'azote ou de l'argon. Le rideau de gaz inerte de préférence de forme annulaire permet de minimiser l'envol latéral des particules par l'aspiration du four et la réoxydation des boues traitées avant que celles-ci n'atteignent la couche de laitier respectivement le pied de bain. On utilise de préférence un débit d'azote de l'ordre de 50 Nm³/h à 200°Nm³/h pour former le rideau de protection et pour ainsi protéger le transfert d'environ 10 à 60 t/h de boues traitées comprenant de l'ordre de 50% Fe métallisé à un taux compris entre 60 et 100%. Ces valeurs dépendent de nombreux facteurs, tels que la géométrie du four, la hauteur de chute des boues traitées, des turbulences à l'intérieur du four électrique à arc etc. et doivent être adaptées en conséquence.

Le transfert des boues traitées est généralement réalisé dans la région centrale du four électrique à arc, située entre les électrodes.

On peut mélanger du charbon ayant de préférence un diamètre compris entre 2 et 20 mm aux boues traitées avant leur enfournement dans le four électrique à arc. La quantité de charbon mis en oeuvre dépend de la quantité de carbone contenue dans les boues traitées.

Le besoin de carbone en excès dans la matière sortant du four à étages dépend de la teneur en fer, du niveau de métallisation et du taux de carbonates résiduels. L'expérience montre qu'il faut entre 12 et 18% de C excédentaire si l'on produit une fonte avec 3,5 à 5%C. La teneur en soufre dépend de la teneur en soufre de la boue initiale. On visera une teneur en soufre de la fonte qui est typiquement entre 0,04 et 0,08% pour une teneur comprise entre 0,4 à 0,6%S dans la boue initiale.

Le zinc contenu dans les boues traitées peut être récupéré par extraction dans sa quasi totalité dans les gaz d'échappement.

En conclusion, outre les avantages présentés ci-dessus, ces étapes supplémentaires d'un mode de réalisation avantageux du procédé de traitement de boues sidérurgiques selon l'invention permettent :
- l'utilisation de ces boues dans un procédé pyrométallurgique, et
- l'extraction quasi complète du zinc.

### Exemples

Le tableau ci-après donne des compositions élémentaires-types de ces boues (ou poussière dans le cas du dépoussiérage sec).

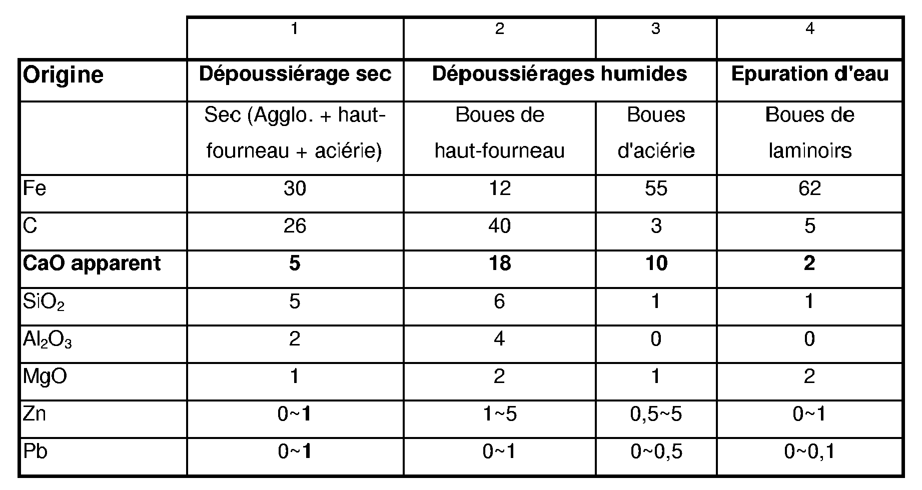

Le problème majeur de la mise en oeuvre d'un procédé de traitement de boues sidérurgiques dans un four à étages provient en fait de la granulométrie très fine des poussières contenues dans ces boues, qui entraîne une fluidité trop importante une fois les boues séchées.

Nous avons découvert qu'en principe il est néanmoins possible de traiter ces boues dans un four à étages dans les conditions mises au point, si suffisamment de chaux CaO est présente pour permettre la formation de ferrites de chaux qui favorisent l'agglomération des poussières.

Or, les données obtenues selon les méthodes de dosage standard montrent une teneur en CaO apparemment suffisante pour une bonne partie des poussières et boues sidérurgiques récupérées dans les usines sidérurgiques intégrées. Néanmoins, lors des recherches qui ont mené à la présente invention, il s'est avéré que dans certains cas, la formation de ferrites de chaux, c'est-à-dire l'agglomération des poussières, ne se produisait pas, et ce même dans des cas présentant une teneur apparemment suffisante en chaux.

Comme indiqué précédemment, ce n'est qu'en effectuant des études plus fines qu'il a étédécouvert qu'en réalité, dû aux méthodes de dosage standard utilisées, le CaO tel qu'il dosé n'est présent sous cette forme en général qu'à 10 à 50% de la quantité de chaux apparente déterminée, le reste se trouvant sous forme d'autres composés du calcium, tels que les carbonates, sulfates, etc.

Même si ces composés peuvent être calcinés à haute température (900°C), une telle température ne peut pas être utilisée pour les raisons expliquées ci-dessus. La chaux ou CaO disponible est par conséquent la fraction de la chaux apparente qui peut, dans les conditions retenues, réagir avec les oxydes de fer présents dans les boues pour former les ferrites de chaux responsables de l'agglomération.

Les essais que nous avons alors effectués en ajustant la teneur en CaO ont permis d'obtenir de bons résultats pour les boues et mélanges de boues de différentes origine dans lesquelles la teneur en CaO disponible a été ajusté à une valeur supérieure à 3%. Des valeurs supérieures à 8% n'apportent en général aucun avantage notable, mais augmentent significativement les coûts du procédé.

## Revendications

1. Procédé de traitement de boues sidérurgiques comprenant les étapes suivantes :
• ajustement de la teneur en CaO disponible des boues afin d'obtenir une teneur en CaO disponible de 3% à 8% rapporté au poids des boues,
• ajout d'un combustible carboné,
• introduction des boues sur un des étages supérieurs d'un four à étages,
• chauffage du four à étages,
• transfert graduel des boues sur les étages inférieurs,
• réglage de la température des gaz d'échappement du four à étages à au moins 500°C et de celle des boues traitées à la sortie du four à étages à une température comprise entre 700°C et 800°C.

2. Procédé de traitement selon la revendication 1, **caractérisé en ce que** l'ajustement de la teneur en CaO disponible est réalisé par ajout de chaux vive et/ou de chaux hydratée.

3. Procédé de traitement selon la revendication 1 ou 2, **caractérisé en ce que** l'ajout de combustible carboné est réalisé en ajoutant du charbon aux boues.

4. Procédé de traitement selon la revendication 3, **caractérisé en ce que** l'ajout de charbon aux boues est - du moins en partie - réalisé sur l'étage supérieure du four à étages.

5. Procédé de traitement selon la revendication 3, **caractérisé en ce que** le charbon est - du moins en partie - mélangé aux boues avant leur introduction dans le four à étages.

6. Procédé de traitement selon l'une quelconque des revendications précédentes, **caractérisé en ce qu'**on ajoute au moins 100 kg de combustible carboné par tonne de boues.

7. Procédé de traitement selon la revendication 1, **caractérisé en ce que** l'ajout de combustible carboné est réalisé - du moins en partie - à l'aide de brûleurs installés dans le four à étages et alimentés en gaz ou en fioul.

8. Procédé de traitement selon l'une quelconque des revendications précédentes, **caractérisé en ce que** le réglage de la température des gaz d'échappement du four à étages à au moins 500°C et/ou de celle des boues traitées à la sortie du four à étages à une température comprise entre 700°C et 800°C est réalisé par injection d'un gaz contenant de l'oxygène.

9. Procédé de traitement selon l'une quelconque des revendications précédentes, **caractérisé en ce que** le réglage de la température des gaz d'échappement du four à étage à au moins 500°C et/ou de celle des boues traitées à la sortie du four à étages à une température comprise entre 700°C et 800°C est réalisé par des brûleurs alimentés en gaz ou en fioul.

10. Procédé de traitement selon l'une quelconque des revendications précédentes, comprenant en outre les étapes suivantes
• traitement pyrométallurgique comprenant la réduction et la fusion des boues traitées sortant du four à étages dans un four électrique,
• extraction de zinc éventuellement contenu dans les boues traitées, des gaz d'échappement et
• coulée de fonte et de laitier à la sortie du four électrique.

11. Procédé selon la revendication 10, dans lequel le four électrique est un four électrique à arc.
